# EUROPÄISCHE PATENTANMELDUNG

(11) **EP 1 537 980 A1**
(43) Veröffentlichungstag der Anmeldung: **08.06.2005**
(21) Anmeldenummer: 04028532.2
(22) Anmeldetag: 02.12.2004
(51) Int. Cl.: B29C 70/44, B29C 70/54

(54) **Verfahren zur Herstellung eines Bauteils aus einem Faserverbundwerkstoff**

(30) Priorität: 02.12.2003 DE 10356135
(71) Anmelder: Deutsches Zentrum für Luft- und Raumfahrt e.V., 53175 Bonn (DE)
(72) Erfinder: Feiler, Markus, 70563 Stuttgart (DE)
(74) Vertreter: HOEGER, STELLRECHT & PARTNER Patentanwälte

(57) **Zusammenfassung**

Um ein Verfahren zur Herstellung eines Bauteils aus einem Faserverbundwerkstoff, bei dem ein Faserhalbzeug (12,18) mit Harz infiltriert wird, wobei zwischen einer ersten Faserhalbzeuglage und einer zweiten Faserhalbzeuglage eine Kernstruktur (16) positioniert wird, zu schaffen, mittels welchem sich Bauteile mit niedrigem Gewicht herstellen lassen, wird vorgeschlagen, daß Kanäle (30) in der Kernstruktur (16) gebildet sind oder gebildet werden, durch die Harz fließen und Faserhalbzeuglagen (12,18) zugeführt werden kann, und daß nach Zuführung von Harz zu einer Faserhalbzeuglage durch die Kanäle (30) der Querschnitt von Kanälen verengt wird.

## Beschreibung

Die Erfindung betrifft ein Verfahren zur Herstellung eines Bauteils aus einem Faserverbundwerkstoff, bei dem ein Faserhalbzeug mit Harz infiltriert wird, wobei zwischen einer ersten Faserhalbzeuglage und einer zweiten Faserhalbzeuglage eine Kernstruktur positioniert wird.

Faserverbundwerkstoffteile lassen sich in sogenannten Prepreg-Verfahren herstellen, bei denen vorimprägnierte Faserlagen aufeinander aufgelegt werden und anschließend in einem Temperatur- und Druckzyklus eine Konsolidierung durchgeführt wird. Solche Prepreg-Verfahren sind kostenintensiv.

Bei den sogenannten Harzinfiltrationsverfahren wird ein Faserhalbzeug mit Harz infiltriert, um eine Harzimprägnierung zu erreichen. Bei einem aus der DE 201 02 569.8 bekannten Verfahren wird beispielsweise das Faserhalbzeug auf einer Form in einem Vakuumraum unterhalb einer Vakuumfolie positioniert und durch Unterdruckbeaufschlagung dieses Vakuumraums relativ zum Umgebungsdruck wird eine Harzinfiltrierung des Faserhalbzeugs erreicht. Anschließend wird ebenfalls eine Konsolidierung des Harzes durchgeführt.

Mittels der genannten Verfahren lassen sich Faserverbundwerkstoffteile herstellen, welche einen im Vergleich zu gleich geformten metallischen Teilen niedrigeres Gewicht aufweisen mit vergleichbaren mechanischen Eigenschaften.

Aus der DE 101 46 201 A1 ist ein Verfahren zur Herstellung eines Faserverbundwerkstoffteils bekannt, bei dem zwischen Faserwerkstofflagen ein Kern gelegt wird und das Fasergelege mit Harz infiltriert wird. Der Kern ist dabei durch eine Zellstruktur mit einer Mehrzahl von in Richtung mindestens einer Faserwerkstofflage offenen Zellen gebildet, welche an dem offenen Ende mit einem Deckel verschlossen werden, um das Eindringen von Harz in die Zellräume zu verhindern. Der oder die Deckel können mit Löchern versehen sein, so daß bei der Harzinfiltration Harz durch ausgewählte Zellen hindurch von der Oberseite des Kerns zur Unterseite fließen kann.

Der Erfindung liegt die Aufgabe zugrunde, ein Verfahren der eingangs genannten Art bereitzustellen, mittels welchem sich Bauteile mit niedrigem Gewicht herstellen lassen.

Diese Aufgabe wird bei dem eingangs genannten Verfahren erfindungsgemäß dadurch gelöst, daß Kanäle in der Kernstruktur gebildet sind oder gebildet werden, durch die Harz fließen und Faserhalbzeuglagen zugeführt werden kann, und daß nach Zuführung von Harz zu einer Faserhalbzeuglage durch die Kanäle der Querschnitt von Kanälen verengt wird.

Erfindungsgemäß wird die Kernstruktur als Fließhilfe für das Harz genutzt, um für eine gleichmäßige Harzzuführung zu den Faserhalbzeuglagen zu sorgen.

Dadurch muß kein Verteilergewebe mehr vorgesehen werden, wodurch sich das Bauteil homogener herstellen läßt und auch glattere Oberflächen hergestellt werden können im Vergleich zu dem Fall, wenn ein Verteilergewebe verwendet werden muß.

Die erste Faserhalbzeuglage und die zweite Faserhalbzeuglage stellen Deckschichten für die Kernstruktur dar, so daß insgesamt eine Sandwichstruktur erreicht ist.

Dadurch, daß erfindungsgemäß der Querschnitt der Kanäle nach der Harzzuführung verringert (einschließlich des Falles der Auflösung der Kanäle) wird, wird der Anteil von Harz in dem Bauteil, welcher in der Kernstruktur verbleibt, minimiert. Dies führt zum einen zu einer Einsparung an Harz bei der Herstellung und zum anderen zu einer Gewichtsverringerung des fertigen Bauteils, da eben der Harzanteil in der Kernstruktur minimiert ist.

Da beispielsweise ein Verteilergewebe bei der Herstellung nicht unbedingt verwendet werden muß, ist eine entsprechende Anordnung zur Herstellung des Bauteils auch einfacher ausgebildet.

Durch das erfindungsgemäße Verfahren läßt sich eine bessere Verteilung des Harzes in den Faserhalbzeuglagen erreichen, wobei das Gewicht des Bauteils minimierbar ist.

Insbesondere erfolgt die Querschnittsverengung vor Aushärtung des Harzes. Dadurch läßt sich erreichen, daß Harz aus den Kanälen ausgetrieben werden kann, so daß der Anteil von ausgehärtetem Harz in der Kanalstruktur minimiert ist. Insbesondere erfolgt eine Querschnittsverengung auf einen Querschnitt, welcher erheblich kleiner ist als der Ausgangsquerschnitt. Dadurch wird sichergestellt, daß der Anteil von in der Kernstruktur verbliebenem Harz minimiert wird.

Insbesondere erfolgt eine Schließung der Kanäle durch Querschnittsverengung, um zu verhindern, daß im fertigen Bauteil die Kanäle mit Harz gefüllt sind.

Besonders vorteilhaft ist es, wenn eine Mehrzahl der Kanäle im wesentlichen aufgelöst wird, das heißt in ihrem Querschnitt so verengt werden, daß in ihnen kein wesentlicher Harzanteil mehr enthalten ist. Insbesondere erfolgt dies bei einer erheblichen Anzahl von Kanälen, um zu einer Gewichtsersparnis zu führen.

Ganz besonders vorteilhaft ist es, wenn die Querschnittsverengung so erfolgt, daß in Kanälen enthaltenes Harz herausgedrückt wird. Dadurch läßt sich der Harzanteil in der Kernstruktur des Bauteils minimieren.

Ganz besonders vorteilhaft ist es, wenn die Kernstruktur als Fließhilfe zur Beförderung von Harz zwischen Faserhalbzeuglagen eingesetzt wird. Dadurch läßt sich eine gleichmäßige Verteilung von Harz auf die Faserhalbzeuglagen auch bei einer Sandwichstruktur erreichen.

Insbesondere ist dann die Kernstruktur bei der Harzinfiltration und nach Aushärtung des Harzes unterschiedlich ausgebildet. Nach Aushärtung des Harzes ist die Kernstruktur bei dem erfindungsgemäßen Verfahren in erheblichem Maße kanalfrei, während bei der Harzinfiltration eben Kanälen vorhanden sind, um für eine gleichmäßige Harzverteilung zu sorgen.

Es kann vorgesehen sein, daß die Kernstruktur mehrteilig mit einer Mehrzahl von Kernelementen ausbildet ist. Die relative Position zwischen Kernelementen läßt sich dann verändern, um so für eine Querschnittsverengung von Kanälen zu sorgen.

Insbesondere liegen die Kanäle zwischen benachbarten Kernelementen. Die Kanäle sind dabei vorzugsweise zwischen Wänden benachbarter Kernelemente gebildet, welche im wesentlichen parallel zueinander ausgerichtet sind.

Es kann auch vorgesehen sein, daß die Kernstruktur einteilig ausgebildet ist.

Die Kanäle können auch in einem Kernelement der Kernstruktur liegen, wobei die Kernstruktur ein einziges Kernelement aufweisen kann (einteilige Kernstruktur) oder eine Mehrzahl von Kernelementen (mehrteilige Kernstruktur) aufweisen kann.

Bei einer Ausführungsform erfolgt die Querschnittsverengung auf mechanische Weise. Insbesondere wird die Kernstruktur bezüglich Größe und/oder Lage mechanisch so verändert, daß eine Querschnittsverengung von Kanälen eintritt.

Es kann vorgesehen sein, daß auf die Kernstruktur Druckkräfte zur Querschnittsverengung ausgeübt werden. Die Druckkräfte führen zu einer Größenveränderung bzw. Lagenveränderung der Kernstruktur, um so Kanäle insbesondere schließen zu können.

Auf fertigungstechnisch einfache Weise wird eine Kanal-Querschnittsverengung erreicht, wenn der Abstand zwischen Kanalwänden mechanisch verringert wird.

Beispielsweise wird dazu bei einer mehrteiligen Kernstruktur der Abstand zwischen benachbarten Kernelementen verringert.

Dies kann dadurch erfolgen, daß die Position von Kernelementen relativ zueinander verändert wird. Es ist auch möglich, daß bei einer mehrteiligen Kernstruktur Kernelemente vergrößert werden, um so den Abstand zwischen benachbarten Kernelementen zu verringern.

Sind beispielsweise Kernelemente der Kernstruktur so ausgebildet, daß ihr Innendruck erhöhbar ist und bei Erhöhung des Innendrucks eine Expansion erfolgt, dann kann nach Zuführung von Harz eben eine solche Expansion zur Querschnittsverengung der Kanäle erfolgen, indem die Kernelemente gewissermaßen "aufgeblasen" werden, und zwar vorzugsweise soweit, bis sich benachbarte Kernelemente berühren.

Es ist vorteilhaft, wenn Kernelemente der Kernstruktur dreiecksförmig ausgebildet sind. Dadurch läßt sich auf einfache Weise der Abstand zwischen benachbarten Kernelementen vergrößern, indem diese Kernelemente expandiert werden, wobei der Druck auf die Faserhalbzeuglagen selber minimierbar ist.

Bei einer weiteren Ausführungsform, welche auch kombiniert mit dem mechanischen Verfahren einsetzbar ist, wird die Querschnittsverengung thermisch induziert bzw. ist thermisch induziert.

Insbesondere wird dazu für die Kernstruktur ein Material verwendet, in welches Kanäle einbringbar sind, deren Querschnitt sich verringern läßt. Beispielsweise wird als Kernstruktur ein niedrig schmelzendes Leichtmetall wie Zinn eingesetzt. Durch Aufschmelzen dieses Metalls nach der Harzzuführung werden die Kanäle insbesondere geschlossen, so daß im fertigen Bauteil die Leichtmetall-Kernstruktur keine Kanäle mehr enthält.

Es ist auch möglich, daß das Material einen Gedächtniseffekt hat, durch welchen sich durch Erhitzung Kanäle schließen lassen. Bei der Erhitzung werden die zuvor (unter Erhitzung) eingebrachten Kanäle aufgrund des Gedächtniseffektes geschlossen. Ein solches Material ist als Schaumstoffmaterial aus dem Stand der Technik bekannt.

Grundsätzlich ist es auch möglich, daß die Querschnittsverengung auf chemische Weise erfolgt.

Insbesondere sind dazu die Kanäle in einem Material gebildet, welches chemisch mit dem Harz reagieren kann und insbesondere oberhalb einer Temperaturschwelle mit dem Harz reagieren kann. Durch die Reaktion läßt sich dann eine Kanalschließung erreichen. Ein geeignetes Material ist beispielsweise das Polyamid bzw. Copolyamid GRILON EMS der EMS-Chemie AG, Donat/Ems, Schweiz. (GRILON ist eine registrierte Marke der EMS-Chemie AG.)

Beispielsweise sind die Kanäle in einem Schlauch aus einem mit Harz reagierenden Material gebildet, wobei dieser Schlauch wiederum in einer entsprechenden Kernstruktur angeordnet sein kann.

Es kann vorgesehen sein, daß die Kernstruktur selber eine Oberflächenstruktur zur Zuführung von Harz in die Kanäle aufweist. Dadurch läßt sich eine gleichmäßige Harzzuführung oder Verteilung bezüglich der Kanäle zum Harztransport zwischen den Faserhalbzeuglagen erreichen.

Insbesondere ist die Oberflächenstruktur eine Kanalstruktur, das heißt die Oberfläche bzw. Oberflächen der Kernstruktur ist mit Kanälen versehen, über die Harz den Kanälen zum Harztransport zwischen den Faserhalbzeuglagen zuführbar ist.

Die Kanäle der Oberflächenstruktur erstrecken sich vorzugsweise quer zu den Kanälen, die zum Harztransport zwischen den Faserhalbzeuglagen dienen. Es läßt sich dann über die Kanäle der Oberflächenstruktur eine gleichmäßige Verteilung des Harzes über die Oberfläche der Kernstruktur erreichen, um so wiederum die Kernstruktur als Fließhilfe für den Harztransport zwischen den Faserhalbzeuglagen nutzen zu können.

Es ist möglich, daß Kanäle zwischen Faserhalbzeuglagen gebildet sind oder gebildet werden. Dadurch läßt sich Harz zwischen Faserhalbzeuglagen transportieren.

Es ist zusätzlich oder alternativ möglich, daß ein oder mehrere Kanäle einer Faserhalbzeuglage zugewandt gebildet sind oder gebildet werden. Dadurch läßt sich über einen solchen Kanal Harz der zugeordneten Faserhalbzeuglage direkt zuführen.

Insbesondere weist dann ein entsprechender Kanal eine einer Faserhalbzeuglage zugewandte offene Seite auf, so daß über diese Seite aus dem Kanal heraus Harz in die Faserhalbzeuglage eingekoppelt werden kann.

Ganz besonders vorteilhaft ist es, wenn zwischen Kernelementen einer mehrteiligen Kernstruktur Abstandshalter positioniert werden. Die Abstandshalter sorgen dafür, daß die Kernelemente in Position verbleiben, wenn durch die zwischen benachbarten Kernelementen gebildeten Kanäle Harz geführt wird.

Günstig ist es in diesem Zusammenhang, wenn Abstandshalter aus einem Material hergestellt sind, welches chemisch mit dem Harz reagieren kann. Mit oder nach der Harzzuführung können dann diese Abstandshalter ihre Größe verändern und sich insbesondere auflösen, um so eine Querschnittsverengung von Kanälen zu erreichen. Ein mögliches Material für die Abstandshalter ist das bereits oben erwähnte Polyamid bzw. Copolyamid GRILON EMS.

Die nachfolgende Beschreibung bevorzugter Ausführungsformen dient im Zusammenhang mit der Zeichnung der näheren Erläuterung der Erfindung. Es zeigen:
- Figur 1: eine schematische seitliche Schnittansicht einer Anordnung zur Herstellung eines Bauteils aus einem Faserverbundwerkstoff, wobei eine Kernstruktur Kanäle aufweist, durch die Harz fließen kann;
- Figur 2: die Anordnung gemäß Figur 1 in einem späteren Zwischenschritt, wobei die Kanäle geschlossen sind;
- Figur 3: eine weitere Anordnung, wobei in einer Kernstruktur Kanäle gebildet sind;
- Figur 4: eine weitere Anordnung mit einer Kernstruktur, welche schlauchförmige Kanäle aufweist und
- Figur 5: eine weitere Anordnung mit einer Kernstruktur mit zu Faserhalbzeuglagen offenen Kanälen.

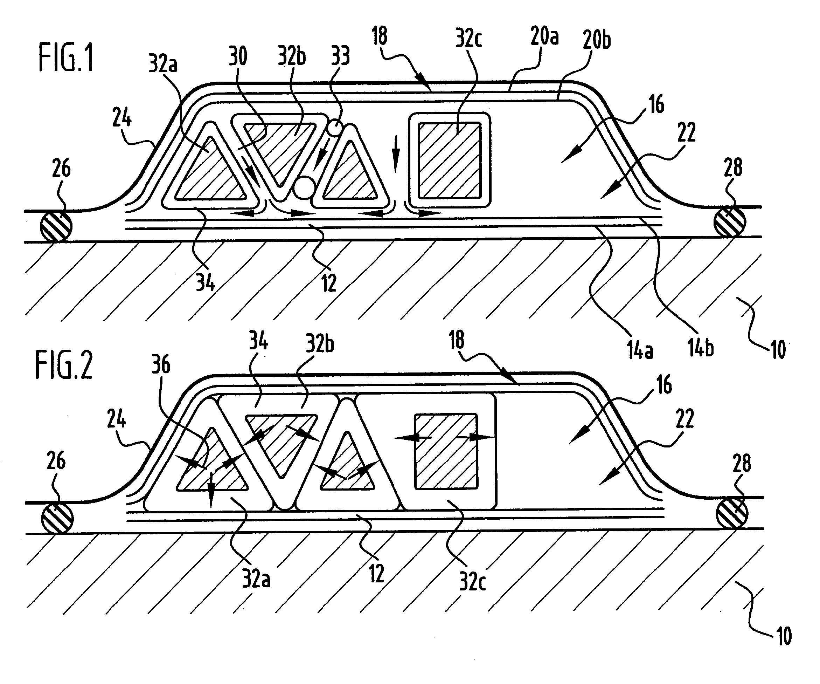

Bauteile aus Faserverbundwerkstoffen lassen sich über Harzimprägnierungsverfahren (Harzinjektionverfahren, Harzinfiltrationsverfahren) herstellen. In Figur 1 ist schematisch eine entsprechende Anordnung gezeigt:

Auf einer Form 10, welche insbesondere beheizbar ist, ist eine Faserhalbzeuglage 12 positioniert. Diese Faserhalbzeuglage 12 kann eine Mehrzahl von Faserwerkstoffschichten 14a, 14b umfassen.

Es kann grundsätzlich vorgesehen sein, daß unterhalb der Faserhalbzeuglage 12 zu der Form 10 hin ein Verteilergewebe als Fließhilfe angeordnet ist, in dem Fließkanäle sind, über die der Faserhalbzeuglage 12 Harz zur Imprägnierung zuführbar ist. Bei der erfindungsgemäßen Lösung kann jedoch, wie unten noch näher erläutert wird, auf ein solches Verteilergewebe verzichtet werden.

Zwischen der Faserhalbzeuglage 12 und der Form 10 bzw. dem Verteilergewebe und der Form 10 kann auch eine Trennfolie angeordnet sein (in der Zeichnung nicht gezeigt), um ein fertiges Bauteil leichter von der Form 10 lösen zu können.

Auf der Faserhalbzeuglage 12, welche eine untere Faserhalbzeuglage ist, ist eine Kernstruktur 16 angeordnet.

Auf der Kernstruktur 16 ist eine obere Faserhalbzeuglage 18 positioniert, welche eine Mehrzahl von Faserwerkstoffschichten 20a, 20b umfassen kann.

Die Faserhalbzeuglage 18 ist eine erste Faserhalbzeuglage und die Faserhalbzeuglage 12 ist eine zweite Faserhalbzeuglage, zwischen welchen als Sandwichkern die Kernstruktur 16 angeordnet ist. Die Faserhalbzeuglagen 18 und 12 bilden dadurch Deckschichten für die Kernstruktur 16.

Auf der oberen (ersten) Faserhalbzeuglage 18 kann ein Verteilergewebe angeordnet sein (in der Figur nicht gezeigt), welches Fließkanäle aufweist, über die der ersten Faserhalbzeuglage 18 Harz zu deren Harzimprägnierung zuführbar ist. Auf ein solches Verteilergewebe läßt sich erfindungsgemäß auch verzichten.

Die oben beschriebene Anordnung der Faserhalbzeuglagen 12 und 18 und der Kernstruktur 16 ist beispielsweise in einem Vakuumraum 22 angeordnet, welcher mittels einer Vakuumfolie 24 gebildet ist, welche über Dichtungen 26, 28 so gegenüber der Form 10 abgedichtet ist, daß in dem Vakuumraum 22 ein Unterdruck gegenüber dem Umgebungsdruck erzeugbar ist. Durch diesen Unterdruck läßt sich in den Vakuumraum 22 Harz in das Faserhalbzeug 12, 18 einsaugen.

Entsprechende Zuführungsvorrichtungen für das Harz in dem Vakuumraum 22 und Unterdruckbeaufschlagungsvorrichtungen für diesen Vakuumraum 22 sind in der Figur 1 nicht gezeigt.

Nach der Harzinfiltrierung des Faserhalbzeugs 12, 18 wird das Harz insbesondere durch Temperaturbeaufschlagung ausgehärtet. Ein entsprechendes Verfahren ist in der DE 201 02 569.8 beschrieben, auf die hiermit ausdrücklich Bezug genommen wird.

Das Faserhalbzeug kann aber auch durch Harzinjektionsverfahren mit Harz infiltriert werden, wobei ein Überdruck gegen den Umgebungsdruck ansteht, so daß das Harz in das Faserhalbzeug 12, 18 eingepreßt wird.

Damit eine Imprägnierung der Faserhalbzeuglagen 12 und 18 erfolgen kann, ist es erfindungsgemäß vorgesehen, daß in der Kernstruktur 16 Kanäle 30 gebildet sind bzw. die Kernstruktur 16 solche Kanäle 30 umfaßt, so daß Harz während der Harzzuführung von der ersten Faserhalbzeuglage 18 durch die Kernstruktur 16 hindurch zu der zweiten Faserhalbzeuglage 12 fließen kann bzw. umgekehrt. Die Kernstruktur 16 ist dadurch mit ihren Kanälen 30 als Fließhilfe für das Harz ausgebildet, um für eine Harzimprägnierung der Faserhalbzeuglagen 12 und 18 zu sorgen. Durch das Vorsehen von Kanälen läßt sich das Harz in dem Faserhalbzeug besser verteilen.

Bei dem in Figur 1 gezeigten Ausführungsbeispiel umfaßt die Kernstruktur 16 eine Mehrzahl von getrennten Kernelementen 32a, 32b, 32c usw. Diese Kernelemente erstrecken sich vorzugsweise in einer Richtung parallel zu den Faserhalbzeuglagen 12, 18 (in der Figur 1 senkrecht zur Zeichenebene). Sie können im Querschnitt dreiecksförmig ausgebildet sein (Kernelemente 32a, 32b) oder näherungsweise rechteckig (Kernelemente 32c). Benachbarte Kernelemente 32a, 32b weisen vorzugsweise einander zugewandt im wesentlichen parallele Wände auf.

Die Kernelemente 32a, 32b, 32c sind grundsätzlich so ausgebildet und angeordnet, daß ihr Abstand veränderbar ist. Dadurch kann der (freie) Querschnitt der Kanäle 30, welche zwischen benachbarten Kernelementen 32a, 32b gebildet sind, verändert werden.

Es kann vorgesehen sein, daß zwischen benachbarten Kernelementen Abstandshalter 33 angeordnet sind, um für eine ausgerichtete Positionierung der Kernelemente während des Harztransports durch die Kanäle 30 zu sorgen und dabei insbesondere die Kanäle 30 selber zu bilden.

Günstigerweise sind diese Abstandshalter 33 aus einem Material hergestellt, welches chemisch mit dem Harz reagiert. Dadurch läßt sich insbesondere bei längerem Kontakt mit dem Harz und/oder bei Temperaturerhöhung ein Auflösen der Abstandshalter 33 erreichen, so daß auf diese Weise die Kanäle 30 verschlossen werden können. Ein mögliches Material für solche Abstandshalter 33 ist das Polyamid bzw. Copolyamid GRILON EMS der EMS-Chemie AG, Donat/Ems, Schweiz.

Während der Harzzuführung sind die Kernelemente 32a, 32b, 32c so beabstandet, daß zwischen ihnen jeweilige Kanäle 30 gebildet sind, durch die Harz beispielsweise von der ersten Faserhalbzeuglage 18 zu der zweiten Faserhalbzeuglage 12 durch die Kernstruktur 16 hindurch strömen kann. Es kann dazu vorgesehen sein, daß die Kernelemente 32a, 32b, 32c extern fixiert werden, um diese Kanäle 30 während des Harzflusses offen zu halten.

In Figur 1 ist schematisch eine Stufe der Harzzuführung gezeigt, bei der Harz von der oberen (ersten) Faserhalbzeuglage 18 durch die Kanäle 30 hindurch zu der unteren (zweiten) Faserhalbzeuglage 12 fließen kann, um diese zweite Faserhalbzeuglage 12 zu infiltrieren.

Erfindungsgemäß ist es vorgesehen, daß die Kanäle 30 oder zumindest eine erhebliche Anzahl dieser Kanäle nach dieser Zuführungsstufe in ihrem Querschnitt verengt werden und diese Kanäle 30 insbesondere "geschlossen" werden. Dies ist in Figur 2 angedeutet:

Nachdem die zweite Faserhalbzeuglage 12 mit genügend Harz versorgt ist, wird die Fließhilfefunktion der Kernstruktur 16 nicht mehr benötigt. Der Querschnitt der Kanäle 30 kann dann verengt werden, und zwar insbesondere derart, daß Harz aus den Kanälen 30 in die Faserhalbzeuglagen 12 und 18 gedrückt wird. Insbesondere werden die Kanäle soweit geschlossen, daß sie gewissermaßen aufgelöst werden.

Bei einem Ausführungsbeispiel des erfindungsgemäßen Verfahrens erfolgt die Querschnittsverengung der Kanäle 30 auf mechanische Weise, indem insbesondere der Abstand zwischen benachbarten Kernelementen 32a, 32b verringert wird, um so eben den Querschnitt von zwischen benachbarten Kernelementen 32a, 32b gebildeten Kanälen 30 zu verringern. Dies erfolgt insbesondere mittels Druckkräften.

Beispielsweise sind die Kernelemente 32a, 32b, 32c aufblasbar ausgebildet mit einer gasdichten Hülle 34. Die Hülle 34 ist flexibel. Bei der Zuführungsstufe gemäß Figur 1 weisen die Kernelemente 32a, 32b, 32c eine geringere Querschnittsfläche auf als bei der Querschnittsverengungsstufe gemäß Figur 2. In Figur 1 sind die Kernelemente 32a, 32b, 32c nicht aufgeblasen oder bis zu einem bestimmten Querschnitt aufgeblasen. Nach der Infiltration wird der Innendruck der Kernelemente 32a, 32b, 32c gesteigert. In Figur 2 erfolgt dann von einem Ausgangsquerschnitt (welcher den Ausgangsquerschnitt der Kanäle 30 gemeinsam mit der Anordnung der Kernstruktur 16 festlegt) eine Expansion der Kernelemente 32a, 32b, 32c durch Aufblasen, welche durch die Pfeile 36 in Figur 2 angedeutet ist. Die Pfeile 36 geben die Expansionsrichtung der Kernelemente 32a, 32b, 32c zur Querschnittsverengung der Kanäle 30 an. Insbesondere erfolgt eine gleichmäßige Expansion über den Querschnitt jedes Kernelements 32a, 32b, 32c.

Auf diese Weise wird der Abstand zwischen benachbarten Kernelementen 32a, 32b verringert (wie in Figur 2 angedeutet); wenn sich benachbarte Kernelemente 32a, 32b berühren (wie in Figur 2 gezeigt), dann werden dadurch die Kanäle 30 zwischen diese benachbarten Kernelementen 32a, 32b geschlossen bzw. ausgelöscht. Dies kann auf eine solche Weise erfolgen, daß Harz, welches vor der Expansion der Kernelemente 32a, 32b, 32c sich in den Kanälen 30 befindet, aus den Kanälen 30 gedrückt wird und dabei in die erste Faserhalbzeuglage 18 und/oder zweite Faserhalbzeuglage 12 gedrückt wird.

Nach der Querschnittsverengung der Kanäle 30 und insbesondere Schließen der Kanäle 30 kann dann eine Aushärtung des Harzes erfolgen.

Zum Aufblasen der Kernelemente 32a, 32b, 32c ist eine entsprechende Zuführungsvorrichtung für Gas vorgesehen (in den Figuren 1 und 2 nicht gezeigt), so daß sich der Querschnitt der Kernelemente 32a, 32b, 32c ausgehend von einem Ausgangsquerschnitt vergrößern läßt.

Es sind auch andere mechanische Lösungen möglich, um den Abstand benachbarter Kernelemente 32a, 32b zu verringert; beispielsweise kann ein externer Stempel vorgesehen sein, welcher die Kernelemente 32a, 32b relativ zueinander zusammenschiebt.

Es ist vorteilhaft, wenn zumindest äußere Kernelemente 32a, 32b ein dreiecksförmigen Querschnitt aufweisen.

Durch das erfindungsgemäße Verfahren lassen sich Bauteile mit Sandwichstruktur herstellen, da eine Fließhilfe nicht unbedingt erforderlich ist. Auch wenn nur eine Faserhalbzeuglage (wie die Faserhalbzeuglage 18 als Deckschicht) zugänglich ist, läßt sich durch das erfindungsgemäße Verfahren dennoch auch die untere Faserhalbzeuglage 12 mit Harz imprägnieren. Auch für die untere Lage ist keine Fließhilfe unbedingt notwendig, so daß eine entsprechende glatte formseitige Fläche für ein Bauteil herstellbar ist. Erfindungsgemäß weist das fertige Bauteil auch keine Harzkanäle auf (mit Harz gefüllte Kanäle in der Kernstruktur 16) bzw. der Anteil von Harz in der Kernstruktur 16 ist minimiert. Dadurch ist auch ein Hauptzweck der Kernstruktur 16, nämlich das Gewicht der fertigen Bauteiles gering zu halten, gewährleistet, da eben mit Harz gefüllte Kanäle, welche zu einer ungewollten Gewichtssteigerung führen, zumindest minimiert sind und der Anteil von Harz in eventuell verbliebenen Kanälen minimiert ist.

Durch das erfindungsgemäße Verfahren werden die beiden Deckschichten 12 und 18 für die Infiltration mit Harz zugänglich. Dies ist unabhängig davon, wie die Kernstruktur 16 selber ausgebildet ist, ob sie beispielsweise als Wabenkern, Schaumkern, als Abstandskern oder dergleichen ausgebildet ist. Wenn dafür gesorgt wird, daß nach der Harzbeaufschlagung der Faserhalbzeuglagen 12, 18 eine Querschnittsverengung der Kanäle 30 stattfindet, dann treten die oben beschriebenen Vorteile ein.

Die Herstellung des Bauteils läßt sich auch dadurch vereinfachen, daß Elemente wie Fließhilfen weggelassen werden können. Dadurch tritt eine entsprechende Kostenersparnis ein und die Anordnung zur Herstellung des Bauteils ist entsprechend einfacher ausgebildet.

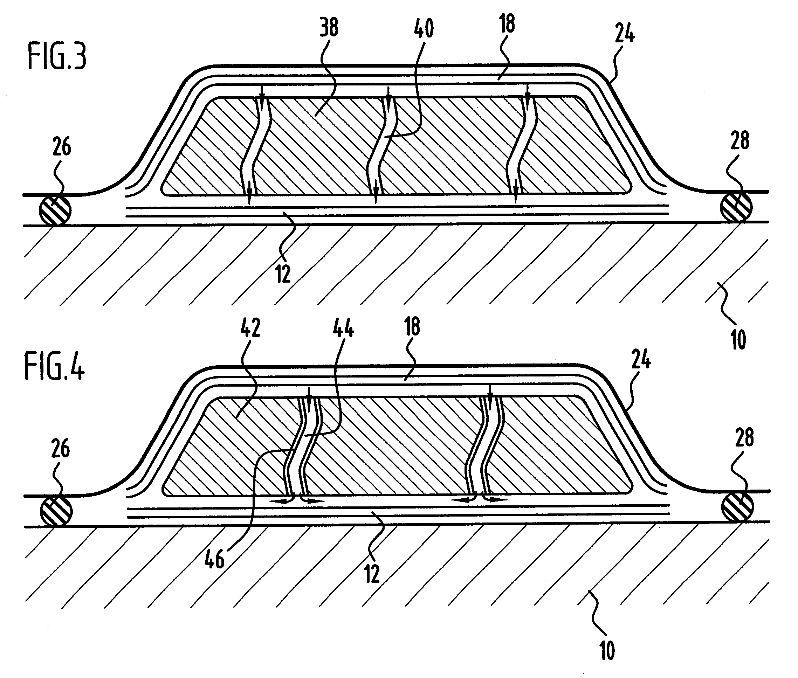

Bei einem weiteren Ausführungsbeispiel ist es vorgesehen, die Kanalverengung thermisch induziert durchzuführen. Eine entsprechende Anordnung ist schematisch in Figur 3 gezeigt, wobei für die gleichen Elemente wie in den Anordnungen der Figuren 1 und 2 gleiche Bezugszeichen verwendet werden.

Bei diesem Ausführungsbeispiel ist eine Kernstruktur 38 vorgesehen, welche einteilig oder mehrteilig ausgebildet sein kann. In der Kernstruktur 38 sind Kanäle 40 gebildet, über die während der Harzinfiltrationsstufe Harz hindurch fließen kann, um so die beiden Faserhalbzeuglagen 12 und 18 gleichmäßig mit Harz versorgen zu können. Nach der Harzversorgung wird eine Querschnittsverengung für die Kanäle 40 durchgeführt und diese werden insbesondere ausgelöscht (das heißt durch Querschnittsverengung geschlossen), so daß ein minimaler Anteil von Harz in den Kanälen 40 verbleibt. Diese Querschnittsverengung erfolgt vor Aushärtung des Harzes.

Es ist dabei vorgesehen, daß die Querschnittsverengung thermisch induziert wird, das heißt durch Erwärmung der Kernstruktur 38 werden die Kanäle 40 geschlossen. Beispielsweise ist die Kernstruktur 38 aus einem niedrig schmelzenden Leichtmetall wie Zinn hergestellt. In die Kernstruktur 38 sind die Kanäle 40 beispielsweise durch Bohrungen eingeformt. Nach der Harzzuführung wird die Kernstruktur 38 soweit erwärmt, daß sich die Kanäle 40 dadurch schließen, daß das Material der Kernstruktur 38 selber die Kanäle 40 ausfüllt. Der Erhitzungsvorgang erfolgt dabei vorzugsweise derart, daß Harz aus den Kanälen 40 in die Deckschichten 12, 18 gedrängt wird. (In Figur 3 ist die Zuführungsstufe vor der Erhitzungsstufe gezeigt.)

Mit dieser Erhitzungsstufe oder dieser nachfolgend kann dann eine Erhitzung der Anordnung als Ganzes erfolgen, um das Harz auszuhärten.

Eine Schließung der Kanäle 40 auf thermisch induzierte Weise kann beispielsweise auch dadurch erfolgen, daß für die Kernstruktur 38 ein Material verwendet wird, welches einen Gedächtniseffekt hat. In dieses Material werden insbesondere in erhitztem Zustand Kanäle 40 eingebracht, um so eben eine Fließstruktur zu schaffen. Bei der Imprägnierung mit Harz kann dieses durch diese Kanäle 40 fließen. Vor der endgültigen Aushärtung des Harzes wird der Gedächtniseffekt des Materials ausgenutzt, das heißt es werden die Kanäle durch Erhitzung des Materials geschlossen (das Material wird in seinen Ausgangszustand vor Einbringung der Kanäle 40 versetzt) und zwar vorzugsweise in einer solchen Art und Weise, daß Harz aus den Kanälen 40 ausgetrieben wird.

Ein geeignetes Schaumstoffmaterial mit einem solchen Gedächtniseffekt ist aus dem Stand der Technik bekannt (beispielsweise der Polymethacrylimid-Hartschaumstoff ROHACELL der Röhm GmbH & Co. KG, Darmstadt).

Bei einem weiteren Ausführungsbeispiel ist eine Kernstruktur 42 (Figur 4) vorgesehen, welche Kanäle 44 umfaßt, welche in einem Material gebildet sind, welches chemisch mit dem Harz reagiert. Beispielsweise kann die Kernstruktur 42 als Ganzes aus diesem Material hergestellt sein oder die Kanäle 44 sind in Schläuchen 46 aus diesem Material gebildet, wobei diese Schläuche wiederum in der Kernstruktur angeordnet sind.

Wenn das entsprechende Material, welches die Kanäle 44 umgibt, mit dem Harz reagiert, welches insbesondere unter höheren Temperaturen erfolgt, dann führt dies zu einem Schließen der Kanäle 44 bei Austreibung des Harzes, das heißt zu einer Querschnittsverengung an den Kanälen 44. Dadurch treten die oben beschriebenen Vorteile auf. Es können polyamidische oder copolyamidische Materialien eingesetzt werden.

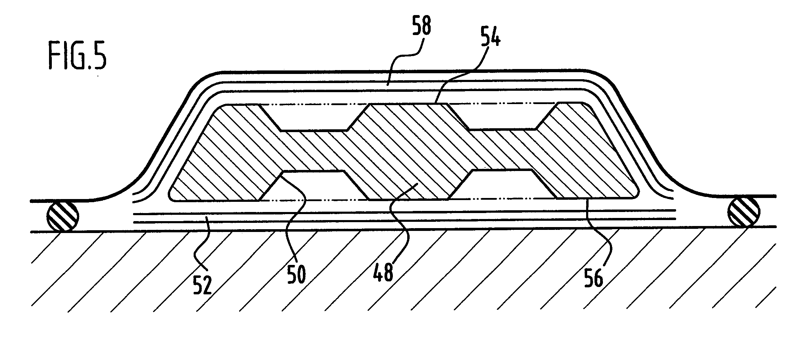

Es kann auch vorgesehen sein, daß die Kernstruktur 16, 38, 42 selber eine Oberflächenstruktur aufweist und insbesondere eine Oberflächenstruktur mit Kanälen aufweist, um gleichmäßig über die Oberfläche der Kernstruktur 16, 38, 42 Harz zu den entsprechenden Kanälen 30, 40, 44 zuführen zu können. Beispielsweise sind in den entsprechenden Kernelementen an der Oberfläche Nuten gebildet, um für eine Verteilung des Harzes und Zuführung zu den Kanälen 30, 40, 44 zu sorgen (vgl. Fig. 5).

Es ist auch grundsätzlich möglich, daß das Harz in Kanälen (wie den Kanälen 30, 40, 44) gelagert ist und insbesondere in fester Form gelagert ist. Bei der Erhitzung wird das Harz verflüssigt und kann durch die Kanäle zu Faserhalbzeuglagen fließen. Die "gefüllten" Kanäle stellen dadurch eine Art von Harzlager dar.

Es ist auch denkbar, das Harz, welches in den Kanälen verbleibt, aufzuschäumen, um den Harzanteil im Bauteil gewichtsmäßig gering zu halten.

Bei einem weiteren Ausführungsbeispiel, welches in Figur 5 gezeigt ist, ist eine Kernstruktur 48 vorgesehen, welche eine Mehrzahl von Kanälen 50 umfaßt, welche zu einer Faserhalbzeuglage 52 hin offen sind und insbesondere seitlich offen sind. Dadurch kann Harz, welches in einem entsprechenden Kanal 50 strömt, der Faserhalbzeuglage 50 zugeführt werden und in dieser und in weiteren anschließenden Faserlagen verteilt werden.

Insbesondere bilden die Kanäle 50 eine Verteilungsstruktur auf einer oder mehreren Oberflächen 54, 56 der Kernstruktur 48, so daß über diese Kanäle 50 eben den Faserhalbzeuglagen 58 bzw. 50 Harz zuführbar ist und Harz verteilbar ist.

Um das Gewicht des hergestellten Bauteils zu verringern, ist es erfindungsgemäß wieder vorgesehen, daß sich diese Kanäle 50 in ihrem Querschnitt verengen, wenn das Harz zu den entsprechenden Faserhalbzeuglagen zugeführt wurde.

Es ist grundsätzlich auch möglich, daß die Kernstruktur eine Kanalstruktur aufweist mit Kanälen, welche zur Zuführung von Harz zwischen Faserhalbzeuglagen dienen und mit Kanälen, welche zur Zuführung und Verteilung von Harz zu zugewandten Faserhalbzeuglagen dienen.

## Patentansprüche

1. Verfahren zur Herstellung eines Bauteils aus einem Faserverbundwerkstoff, bei dem ein Faserhalbzeug mit Harz infiltriert wird, wobei zwischen einer ersten Faserhalbzeuglage und einer zweiten Faserhalbzeuglage eine Kernstruktur positioniert wird,
**dadurch gekennzeichnet** , daßKanäleinderKernstruktur gebildet sind oder gebildet werden, durch die Harz fließen und Faserhalbzeuglagen zugeführt werden kann, und daß nach Zuführung von Harz zu einer Faserhalbzeuglage durch die Kanäle der Querschnitt von Kanälen verengt wird.

2. Verfahren nach Anspruch 1, **dadurch gekennzeichnet, daß** die Querschnittsverengung vor Aushärtung des Harzes erfolgt.

3. Verfahren nach Anspruch 1 oder 2, **dadurch gekennzeichnet, daß** eine Querschnittsverengung auf einen Querschnitt erfolgt, welcher erheblich kleiner ist als der Ausgangsquerschnitt.

4. Verfahren nach einem der vorangehenden Ansprüche, **dadurch gekennzeichnet, daß** eine Schließung der Kanäle durch Querschnittsverengung erfolgt.

5. Verfahren nach einem der vorangehenden Ansprüche, **dadurch gekennzeichnet, daß** eine Mehrzahl der Kanäle im wesentlichen aufgelöst wird.

6. Verfahren nach einem der vorangehenden Ansprüche, **dadurch gekennzeichnet, daß** die Querschnittsverengung so erfolgt, daß in Kanälen enthaltenes Harz herausgedrückt wird.

7. Verfahren nach einem der vorangehenden Ansprüche, **dadurch gekennzeichnet, daß** die Kernstruktur als Fließhilfe zur Beförderung von Harz zwischen Faserhalbzeuglagen eingesetzt wird.

8. Verfahren nach Anspruch 7, **dadurch gekennzeichnet, daß** die Kernstruktur bei der Harzinfiltration und nach Aushärtung des Harzes unterschiedlich ausgebildet ist.

9. Verfahren nach einem der vorangehenden Ansprüche, **dadurch gekennzeichnet, daß** die Kernstruktur mehrteilig mit einer Mehrzahl von Kernelementen ausgebildet ist.

10. Verfahren nach Anspruch 9, **dadurch gekennzeichnet, daß** die Kanäle zwischen benachbarten Kernelementen liegen.

11. Verfahren nach Anspruch 10, **dadurch gekennzeichnet, daß** die Wände benachbarter Kernelemente parallel oder näherungsweise parallel sind.

12. Verfahren nach einem der Ansprüche 1 bis 8, **dadurch gekennzeichnet, daß** die Kernstruktur einteilig ausgebildet ist.

13. Verfahren nach einem der vorangehenden Ansprüche, **dadurch gekennzeichnet, daß** die Kanäle in einem Kernelement der Kernstruktur liegen.

14. Verfahren nach einem der vorangehenden Ansprüche, **dadurch gekennzeichnet, daß** die Querschnittsverengung auf mechanische Weise erfolgt.

15. Verfahren nach Anspruch 14, **dadurch gekennzeichnet, daß** die Kernstruktur bezüglich Größe und/oder Lage mechanisch so verändert wird, daß eine Querschnittsverengung von Kanälen erfolgt.

16. Verfahren nach Anspruch 14 oder 15, **dadurch gekennzeichnet, daß** auf die Kernstruktur Druckkräfte zur Querschnittsverengung ausgeübt werden.

17. Verfahren nach einem der Ansprüche 14 bis 16, **dadurch gekennzeichnet, daß** der Abstand zwischen Kanalwänden mechanisch verringert wird.

18. Verfahren nach einem der Ansprüche 14 bis 17, **dadurch gekennzeichnet, daß** bei einer mehrteiligen Kernstruktur der Abstand zwischen benachbarten Kernelementen verringert wird.

19. Verfahren nach einem der Ansprüche 14 bis 18, **dadurch gekennzeichnet, daß** bei einer mehrteiligen Kernstruktur Kernelementen vergrößert werden.

20. Verfahren nach einem der Ansprüche 14 bis 19, **dadurch gekennzeichnet, daß** Kernelemente der Kernstruktur so ausgebildet sind, daß ihr Innendruck erhöhbar ist und bei Erhöhung des Innendrucks eine Expansion erfolgt.

21. Verfahren nach einem der Ansprüche 14 bis 20, **dadurch gekennzeichnet, daß** Kernelemente der Kernstruktur im Querschnitt dreiecksförmig ausgebildet sind.

22. Verfahren nach einem der vorangehenden Ansprüche, **dadurch gekennzeichnet, daß** die Querschnittsverengung thermisch induziert ist oder wird.

23. Verfahren nach Anspruch 22, **dadurch gekennzeichnet, daß** für die Kernstruktur ein Material verwendet wird, in welches Kanäle einbringbar sind, deren Querschnitt sich thermisch verringern läßt.

24. Verfahren nach Anspruch 23, **dadurch gekennzeichnet, daß** das Material einen Gedächtniseffekt hat, durch welchen durch Erhitzung der Querschnitt von Kanälen verringerbar ist.

25. Verfahren nach einem der vorangehenden Ansprüche, **dadurch gekennzeichnet, daß** die Querschnittsverengung auf chemische Weise erfolgt.

26. Verfahren nach Anspruch 25, **dadurch gekennzeichnet, daß** die Kanäle in einem Material gebildet sind, welches chemisch mit dem Harz reagieren kann.

27. Verfahren nach Anspruch 25 oder 26, **dadurch gekennzeichnet, daß** die Kanäle in einem Schlauch aus einem mit Harz reagierenden Material gebildet sind.

28. Verfahren nach einem der vorangehenden Ansprüche, **dadurch gekennzeichnet, daß** die Kernstruktur eine Oberflächenstruktur zur Zuführung von Harz in die Kanäle aufweist.

29. Verfahren nach Anspruch 28, **dadurch gekennzeichnet, daß** die Oberflächenstruktur eine Kanalstruktur ist.

30. Verfahren nach Anspruch 29, **dadurch gekennzeichnet, daß** die Kanäle der Oberflächenstruktur sich quer zu den Kanälen erstrecken, welche zum Harztransport zwischen den Faserhalbzeuglagen dienen.

31. Verfahren nach einem der vorangehenden Ansprüche, **dadurch gekennzeichnet, daß** Kanäle zwischen Faserhalbzeuglagen gebildet sind oder werden.

32. Verfahren nach einem der vorangehenden Ansprüche, **dadurch gekennzeichnet, daß** ein oder mehrere Kanäle einer Faserhalbzeuglage zugewandt gebildet sind oder werden.

33. Verfahren nach Anspruch 32, **dadurch gekennzeichnet, daß** ein Kanal eine einer Faserhalbzeuglage zugewandte offene Seite hat.

34. Verfahren nach einem der vorangehenden Ansprüche, **dadurch gekennzeichnet, daß** zwischen Kernelementen der Kernstruktur Abstandshalter positioniert werden.

35. Verfahren nach Anspruch 34, **dadurch gekennzeichnet, daß** Abstandshalter aus einem Material hergestellt sind, welches chemisch mit dem Harz reagieren kann.
